# EUROPEAN PATENT SPECIFICATION

(11) **EP 2 618 534 B1**
(45) Date of publication and mention of the grant of the patent: **13.03.2019**
(21) Application number: 11824571.1
(22) Date of filing: 09.09.2011
(51) Int. Cl.: H04L 29/06, H04N 21/658, H04N 21/81, H04N 21/234, H04L 29/08, H04N 21/643, H04N 21/2543, H04N 21/442, H04N 21/845

(54) **METHOD, APPARATUS, AND SYSTEM FOR DYNAMIC MEDIA CONTENT INSERTION BASED ON HTTP STREAM**
VERFAHREN, VORRICHTUNG UND SYSTEM ZUR DYNAMISCHEN EINFÜGUNG VON MEDIENINHALTEN IN EINEN HTTP-STREAM
PROCÉDÉ, APPAREIL ET SYSTÈME D'INSERTION DE CONTENU MULTIMÉDIA DYNAMIQUE SUR LA BASE D'UN FLUX HTTP

(30) Priority: 17.09.2010 CN 201010291945
(43) Date of publication of application: 24.07.2013
(73) Proprietor: Huawei Technologies Co., Ltd., Longgang District Shenzhen, Guangdong 518129 (CN)
(72) Inventor: SHI, Teng, Shenzhen Guangdong 518129 (CN); HUI, Yu, Shenzhen Guangdong 518129 (CN); YUE, Peiyu, Shenzhen Guangdong 518129 (CN)
(74) Representative: Epping - Hermann - Fischer
(86) International application number: PCT/CN2011/079505
(87) International publication number: WO 2012/034501

(56) References cited:
- WO-A2-2010/006128
- CN-A- 101 127 989
- CN-A- 101 561 825
- CN-A- 102 137 137
- US-A1- 2002 156 842
- US-A1- 2002 166 119
- US-A1- 2009 307 732
- QUALCOMM INCORPORATED: "Use cases for Rel-10 Adaptive HTTP Streaming", 3GPP DRAFT; S4-100580-PERMANENTDOCUMENTUSECASES-HSD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Erlangen, Germany; 20100816 - 20100820, 11 August 2010 (2010-08-11), XP050638785, [retrieved on 2010-08-11]
- QUALCOMM EUROPE S A R L: "Baseline Architecture and Definitions for HTTP Streaming", 3GPP DRAFT; S4-090603_HTTP_STREAMING_ARCHITECTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Kista; 20090812, 12 August 2009 (2009-08-12), XP050356889, [retrieved on 2009-08-12]

## Description

### FIELD OF THE INVENTION

The present invention relates to the field of video technologies and, in particular, to a method, an apparatus and a system for dynamic media content insertion based on HTTP streaming.

### BACKGROUND OF THE INVENTION

At present, different media contents can be inserted into a program stream by dynamic media content insertion. For example, customized advertisement insertion may implement the following function: when a user clicks a video, inserting a customized video advertisement according to the user's customized information before the video is played or when the video playing is ended, or by stopping playing of a program in the video playing process, inserting the customized advertisement content, and then returning to the original program after the advertisement is ended.

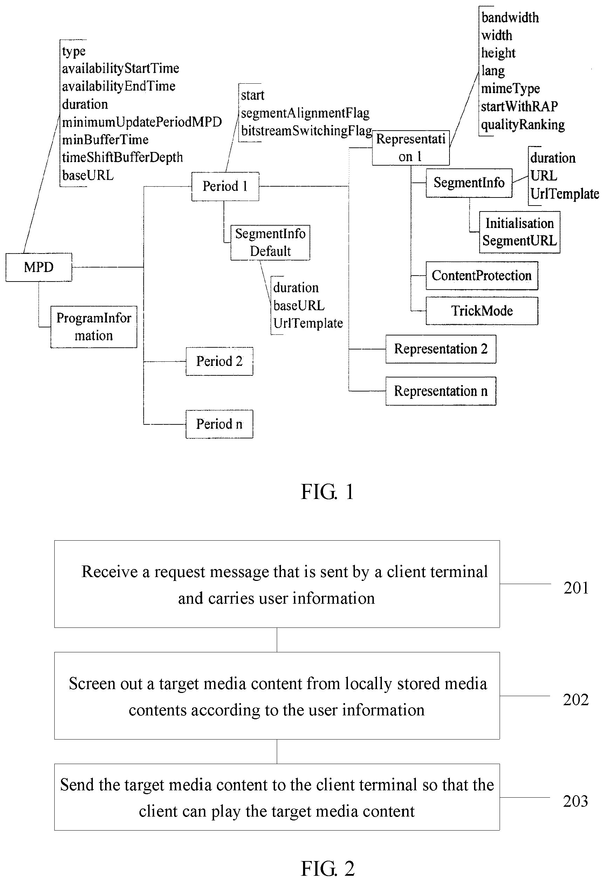

The prior art provides an Hypertext Transfer Protocol (HTTP)) streaming technology to implement advertisement insertion. By using the HTTP streaming technology, a multimedia content may be divided into several media segments and then the media segments are transmitted to a client terminal through the HTTP protocol. Uniform Resource Locators (URLs) of all media segments, wherein the segments is obtained by dividing the multimedia content, are described through an media presentation description (MPD) file. The structure of the MPD file is shown in FIG. 1. According to the sequence of a time axis, one MPD file is divided into one or multiple periods "Periods", where each Period further includes description information "Representation" of different bit rates, and segment information "SegmentInfo" of each Representation describes URLs of several media segments. When the client terminal plays the multimedia content by using the HTTP streaming technology, the client terminal needs to request the MPD file first, and then request, according to the URL of each media segment in the MPD file, the content of the media segment which is going to play.

When the HTTP streaming technology in the prior art is used to implement dynamic media content insertion, taking dynamic advertisement insertion as an example, the insertion may be implemented in the following two modes:
Mode 1: By an encoder, a program content is directly divided into program segments, an advertisement content is directly divided into advertisement segments, and the program segments and advertisement segments are used to generate a segment sequence. After a client terminal receives an MPD file delivered by a server, the client terminal requests obtaining each segment in the segment sequence one by one according to the segment sequence which is described in the MPD file. When the segment requested by the client terminal is a program segment, the client terminal plays the content of the program segment, and the program is played at this time; when the segment requested by the client terminal is an advertisement segment, the client terminal plays the content of the advertisement segment, and the advertisement is played at this time, so that insertion of the advertisement is implemented.
Mode 2: Before the server delivers an MPD file to the client terminal, the server inserts an advertisement segment into the program segment sequence described in the MPD file. Then the server delivers the MPD file to the client terminal. The client terminal requests each segment one by one according to the segment sequence inserted with the advertisement segment described in the MPD file, and plays each segment.

A document for discussion and proposal by Qualcomm Incorporated, titled "Use cases for Rel-10 Adaptive HTTP Streaming" submitted for the meeting of 3GPP TSG-SA4#60 in August 2010 discloses a use case where a service provider offers On-Demand content through 3GPP AHS. In this use case, URLs for externally defined periods may be processed in real-time to generate a new period containing advertisements targeted to the user. The client may supply additional information with the request that may be used for advertisement targeting. (see section 6.1 and section 6.5.1)

### SUMMARY OF THE INVENTION

Embodiments of the present invention provide a method, and an apparatus for dynamic media content insertion based on HTTP streaming, which can solve the problem that customized insertion cannot be implemented when media contents are transmitted through HTTP streaming. The invention is disclosed in the appended claims.

In order to achieve the foregoing objective, embodiments of the present invention adopt the following technical solutions.

A method for dynamic media content insertion based on HTTP streaming, where dynamic media contents are transmitted through HTTP streaming and a program is being played on a client terminal, includes:
receiving, by a server, a request message that is sent by the client terminal and carries user information;
where the receiving, by the server, the request message that is sent by the client terminal and carries the user information comprises: receiving a first media content request message that is sent by the client terminal according to media content obtaining information when a time or an index value indicated by an insertion position of a first media content segment is met and carries the user information;
screening, by the server, out a target media content from locally stored media contents according to the user information; and
sending the target media content to the client terminal so that the client terminal can play the target media content at the insertion time or the insertion index value indicated by the insertion position of the first media content segment;
where before receiving the request message that is sent by the client terminal and carries the user information, the method further includes: receiving a media presentation description MPD request message from the client terminal, and sending an MPD file that carries inserted media content presetting information to the client terminal;
where the media content presetting information includes: the media content obtaining information and the insertion position of the first media content segment, wherein the insertion position of the first media content segment is the insertion time or the insertion index relative to a program segment.

An apparatus for dynamic media content insertion based on HTTP streaming, where dynamic media contents are transmitted through HTTP streaming and a program is being played on a client terminal, includes:
a first receiving unit, configured to receive a request message that is sent by a client terminal and carries user information; where the first receiving unit is specifically configured to receive a first media content request message that is sent by the client terminal according to media content obtaining information when a time or an index value indicated by an insertion position of a first media content segment is met and carries the user information;
a screening unit, configured to screen out a target media content from locally stored media contents according to the user information;
a first sending unit, configured to send the target media content to the client terminal, where the target media content can be played by the client terminal at the insertion time or the insertion index value indicated by the insertion position of the first media content segment; and
a second receiving unit and a second sending unit, where:
   the second receiving unit is configured to receive an MPD request message sent by the client terminal before the first receiving unit receives a request message that is sent by the client terminal and carries the user information; and the second sending unit is configured to send an MPD file that carries inserted media content presetting information to the client terminal;
   where the media content presetting information includes: the media content obtaining information and the insertion position of the first media content segment, wherein the insertion position of the first media content segment is the insertion time or the insertion index relative to a program segment.

According to embodiments of the present invention described in the above technical solutions, when a client terminal watches a program through HTTP streaming, the media content received by the client terminal is obtained by screening by the server according to the user information. Because the user information of different client terminals has differences in customization, different users can receive customized media contents meeting respective requirements. Compared with the prior art in which all client terminals demanding a same program watch the same media content when the client terminals watch the program through HTTP streaming, embodiments of the present invention can enable all the client terminals demanding the same program to watch customized dynamic media contents meeting respective characteristics, thus solving the problem that customized insertion fails to be implemented when media contents are transmitted through HTTP streaming in the prior art, so that customized insertion of dynamic media contents is implemented.

### BRIEF DESCRIPTION OF THE DRAWINGS

To illustrate the technical solutions in embodiments of the present invention or the prior art more clearly, the accompanying drawings used in the description of the embodiments or the prior art are briefly described hereunder. Apparently, the accompanying drawings illustrate only some embodiments of the present invention, and persons skilled in the art can derive other drawings from these drawings without any creative effort.
FIG. 1 is a schematic structural diagram of an MPD file in the prior art;
FIG. 2 is a flowchart of a method for dynamic media content insertion based on HTTP streaming according to an embodiment of the present invention;
FIG. 3 is a flowchart of another method for dynamic media content insertion based on HTTP streaming according to an embodiment of the present invention;
FIG. 4 is a flowchart of a method for dynamic media content insertion based on HTTP streaming implemented by using mode 1 according to an embodiment of the present invention;
FIG. 5 is a flowchart of another method for dynamic media content insertion based on HTTP streaming implemented by using mode 1 according to an embodiment of the present invention;
FIG. 6 is a flowchart of still another method for dynamic media content insertion based on HTTP streaming implemented by using mode 1 according to an embodiment of the present invention;
FIG. 7 is a flowchart of a method for dynamic media content insertion based on HTTP streaming implemented by using mode 2 according to an embodiment of the present invention;
FIG. 8 is a structural diagram of an apparatus for dynamic media content insertion based on HTTP streaming according to an embodiment of the present invention;
FIG. 9 is a structural diagram of a server implemented by using mode 1 according to an embodiment of the present invention;
FIG. 10 is a structural diagram of a server implemented by using mode 2 according to an embodiment of the present invention;
FIG. 11 is a structural diagram of another apparatus for dynamic media content insertion based on HTTP streaming according to an embodiment of the present invention;
FIG. 12 is a structural diagram of a client terminal implemented by using mode 1 according to an embodiment of the present invention; and
FIG. 13 is a structural diagram of a client terminal implemented by using mode 2 according to an embodiment of the present invention.

### DETAILED DESCRIPTION OF THE EMBODIMENTS

The technical solutions in embodiments of the present invention are hereinafter described clearly and completely with reference to the accompanying drawings. Evidently, the described embodiments are only a part of embodiments of the present invention, rather than all embodiments of the present invention. All the other embodiments obtained by persons skilled in the art without creative efforts based on embodiments of the present invention shall fall within the protection scope of the present invention.

An embodiment shown in FIG. 2 provides a method for dynamic media content insertion based on HTTP streaming, where the media contents are transmitted between a server and a client terminal through HTTP streaming. The method is hereinafter described from the perspective of the server. The method includes:
201. Receive a request message that is sent by a client terminal and carries user information.

The user information may be a user identifier, for example, a user ID; or the user information may be complete user description information, for example: name, sex, hobby and location of the user. In the actual application, the user information, which in the request message, may be described in xml format, but the form of the user information is not limited to the xml format.

202. Screen out a target media content from locally stored media contents according to the user information.

Because a conventional server has the function of screening media contents, when the server receives the user information, the server can use the user information as a screening condition, and screen out a target media content from locally stored media contents. The target media content, which is screened out, matches the user information.

203. Send the target media content to the client terminal so that the client terminal can play the target media content.

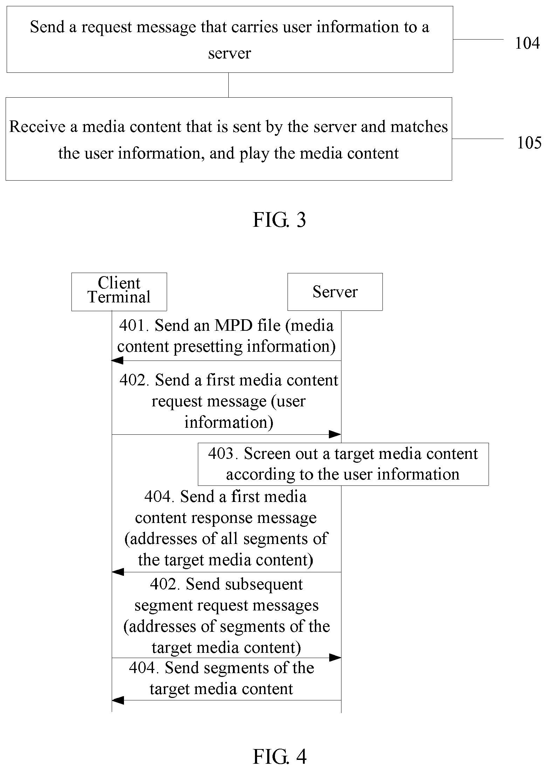

An embodiment shown in FIG. 3 provides a method for dynamic media content insertion based on HTTP streaming, where the media contents are transmitted between a server and a client terminal through HTTP streaming. The method is described from the perspective of the client terminal. The method includes:
301. Send a request message that carries user information to a server.
302. Receive a media content which is sent by the server and matched the user information, and play the received media content.

The method for dynamic media content insertion based on HTTP streaming according to embodiments of the present invention, because the media content receives by the client terminal is screening by the server according to the user information, while the user information of different client terminals has differences in customization, different users can receive dynamic media contents meeting respective requirements. Compared with the prior art in which all client terminals demanding a same program watch a same dynamic media content when the client terminals watch the program through HTTP streaming, embodiments of the present invention can enable all the client terminals demanding the same program to watch customized dynamic media contents meeting respective characteristics, thus solving the problem that customized insertion cannot be implemented when media contents are transmitted through HTTP streaming in the prior art, so that customized insertion of dynamic media contents is implemented.

During the specific implementation, the dynamic media content provided by embodiments of the present invention includes: an advertisement, a trailer of a program, one of subplots of a program, or any combination thereof.

The method for dynamic media content insertion based on HTTP streaming according to embodiments of the present invention can be implemented in the following two modes:
Mode 1: The server inserts media content presetting information into an MPD file. The client terminal obtains the MPD file through a request, when the client terminal reads the media content presetting information, the client terminal sends a media content request message to the server according to the media content obtaining information and insertion positions of media content segments, where the request carries user information, and the server screens out a target media content according to the user information. Afterwards, the server returns addresses of segments and/or content segments of the target media content to the client terminal, and the client terminal requests content segments according to the received addresses of the segments of the target media content or plays the received content segments.
Mode 2: The client terminal sends an MPD request message to the server, where the MPD request message carries user information. The server screens media contents according to the received user information, and inserts the addresses of the segments corresponding to the target media content, that is screened out, into the MPD file; afterwards, the server sends the MPD file to the client terminal. The client terminal requests segment contents one by one according to the addresses sequence of the segments in the MPD file. If an address of a program segment is requested, the client terminal receives and plays a program content sent by the server; if an address of a segment of the target media content is requested, the client terminal receives and plays the segment of the target media content.

The two implementation modes are hereinafter completely described in detail respectively.

An embodiment shown in FIG. 4 provides a method for dynamic media content insertion based on HTTP streaming, wherein the method implements customized media content insertion by using mode 1. The embodiment includes the following steps:
401. After receiving an MPD request message sent by the client terminal, send an MPD file that carries inserted media content presetting information to the client terminal.

The media content presetting information may be located in "Period", or located in "Representation" under the "Period", or located in "SegmentInfo" under the "Representation" which is under the "Period"; the media content presetting information includes: media content obtaining information and insertion position of the first media content segment.

It should be noted that the media content obtaining information includes an identifier of the insertion position of the media content. The identifier of the insertion position of the media content is used to obtain information associated with the insertion position of the media content. The insertion position of the first media content segment may be insertion time or an insertion index relative to the program segment.

In the actual application, as shown in the following Table 1, media content presetting information is added under "SegmentInfo", where "SegmentInfo" is in the "Representation", and "Representation" is under the "Period" (see Adlnfo in Table 1). The media content presetting information may also be located in the "Period", or located in the "Representation" which is under the "Period". The media content presetting information includes three attributes: media content obtaining information (see "Ad-sourceURL" in Table 1), insertion index of the first media content segment (see "Ad-Insertlndex" in Table 1), and insertion time of the first media content segment (see "Ad-starttime" in Table 1).

The insertion index of the first media content segment (see "Ad-Insertlndex" in Table 1) is used to: when addresses of program segments are indicated by "UrlTemplate", insert media contents before program segments whose index values are equal to "Ad-Insertlndex", so that the value of the "Ad-Insertlndex" is between the start value (see "startindex" in Table 1) and the end value (see "endindex" in Table 1) of the program segments.

The insertion time of the first media content segment (see "Ad-starttime" in Table 1) is used to: when addresses of program segments are indicated by "UrlTemplate" or "Url", insert media contents when the program is played to the time indicated by the "Ad-starttime". If addresses of program segments are indicated by "Url", the "Adlnfo" is located between "Urls", and the "Ad-starttime" is not defined, the insertion time of the first segment of the media content is indicated according to the sequence of the "Adlnfo" in the "Url".

**Table 1**

| **Element or Attribute Name** | | **Type (Attribute or Element)** | **Cardinality** | **Optionality** | **Description** |
|---|---|---|---|---|---|
| MPD | | E | 1 | M | MPD |
| ...... | | | | | |
| Period | | E | 1...N | M | Information description of each Period |
| ...... | | | | | |
| Representation | | E | | M | Representation description |
| ...... | | | | | |
| SegmentInfo | | E | 0, 1 | CM Must be present in case SegmentInfo is not present on higher levels | Providing information of each segment |
| UrlTemplate | | E | 0, 1 | CM Must be present if the Url element is not present. | Indicating a url template of program segments |
| | ...... | | | | |
| | startlndex | A | | OD default: 1 | Index of the first program segment in the Representation |
| | endIndex | A | | OD default: infinite | Index of the last program segment in the Representation |
| | | | | | |
| Url | | E | 0, N | CM Must be present if the UrlTemplate element is not present. | Indicating addresses of program segments |
| | ....... | | | | |
| AdInfo | | E | 0, 1 | 0 | Defining media content presetting information |
| | Ad-sourceURL | A | | 0 | Defining media content obtaining information, where the media content obtaining information includes an identifier of the insertion position of the media content |
| | Ad-Insertlndex | A | | 1 by default | Insertion index of the first media content segment relative to a program segment |
| | Ad-starttime | A | | 0 by default | Insertion time of the first media content segment, unit: s |
| | ...... | | | | |

402. According to the media content, the client terminal sends a first media content request message carrying user information to obtain information in the MPD file.

For example, the description about the "Period" carrying media content presetting information in the MPD file received by the client terminal is expressed as follows:

```
    <Period start="PT0S">
        <Representation
            mimeType="video/3gpp; codecs=s263, samr"
            bandwidth="256000">
            <SegmentInfo>
 <AdInfo ad-sourceURL=http://www.example.com/Adselect/33 Ad-starttime=20 />
 <url sourceurl="www.example.com/program1.3gp">
 <url sourceurl="www.example.com/program2.3gp">
 <url sourceurl="www.example.com/program3.3gp">
            </SegmentInfo>
        </Representation>
    </Period>
```

It should be noted that in the "SegmentInfo" of the "Period", addresses of program segments are described by urls, for example, <url sourceurl = "www.example.com/program1.3gp"> indicates the address of the first program segment, <url sourceurl="www.example.com/program2.3gp"> indicates the address of the second program segment, and <url sourceurl="www.example.com/program3.3gp> indicates the address of the third program segment, assuming that the duration of each segment is 10s. Media content presetting information is described by "AdInfo", for example, http://www.example.com/Adselect/33 is used to indicate media content obtaining information, where http://www.example.com/Adselect indicates a media content obtaining address, and 33 indicates an identifier of an insertion position of the media content. It is assumed that the media content obtaining address may be specifically mapped to a dynamic processing file of the media content on the server.

The process of detecting and processing the "Period" by the client terminal is as follows: when the "Adlnfo" in the "Period" is detected by the client terminal, the client terminal can know that the "Period" includes media content presetting information. Afterwards, the client sends segment requests one by one to the server according to the sequence of segment addresses in the "SegmentInfo", where "SegmentInfo" is in the "Representation", and "Representation" is under the "Period". First the client terminal requests program content segments from the server according to the sequence of the program segment addresses, and the server returns the program segment contents. When the insertion time indicated by "Ad-starttime" arrives, the client terminal sends a first media content request message to the server, where the first media content request message carries the user information. The user information may be a user identifier, or may be complete user description information, for example, name, sex, hobby, and location of the user.

In addition, if the server records user description information, the first media content request message only needs to carry a user identifier. In this case, the first media content request message sent according to the media content obtaining information may be expressed as follows:

```
 GET /Adselect/33/%userId%
 Host: www.example.com
```

The above media content obtaining information is composed of a media content obtaining address and an identifier of the insertion position of the media content; "www.example.com/Adselect" in the message body indicates the media content obtaining address; "33" in the message body indicates the identifier of the insertion position of the media content; and "userId" in the message body indicates a user identifier.

403. The server screens out a target media content from locally stored media contents according to the user information.

Specifically, the server obtains insertion position information of the media content according to the identifier of the insertion position of the media content in the media content obtaining information, where the insertion position information of the media content includes a duration of the insertion position of the media content and a program associated with the insertion position of the media content. For example, the dynamic processing file of the media content on the server obtains the insertion position information of the media content according to the identifier "33" of the insertion position of the media content.

Afterwards, the server screens out the target media content from the locally stored media contents according to the user information and the insertion position information of the media content. The target media content matches the user information.

404. The server sends a first media content response message to the client terminal, where the first media content response message includes addresses of all segments of the target media content.

For example, the format of the first media content response message may be expressed as follows:

```
HTTP/1.1 200 OK
 Content-Type: text/xml;
 Content-length: length
 <?xml version="1.0" encoding="utf-8"?>
 <SegmentInfo duration-'PT10S" baseURL="rep2/">
                <InitialisationSegmentURL sourceURL="seg-init.3gp"/>
                <Url sourceURL="adseg-1.3gp"/>
                <Url sourceURL="adseg-2.3gp"/>
                <Url sourceURL="adseg-3.3gp"/>
    </SegmentInfo>
```

Where <Url sourceURL="adseg-1.3gp"/>, <Url sourceURL="adseg-2.3gp"/>, and <Url sourceURL="adseg-3.3gp"/> indicate addresses of all segments of the target media content. The description structure of the addresses of the segments may be defined in accordance with the structures of the "SegmentInfo" and its subelements in the prior MPD file.

405. The client terminal sends subsequent segment request messages in sequence according to the addresses of the segments after receiving the first media content response message.

It should be noted that if the first media content response message includes the address of an initial segment, the initial segment needs to be requested first. Otherwise, requests are sent one by one directly according to the addresses of segments. The specific request process is the same as the existing program segment request process, and is not further described herein.

406. The server sends segment contents corresponding to the addresses of the segments carried in the subsequent segment requests.

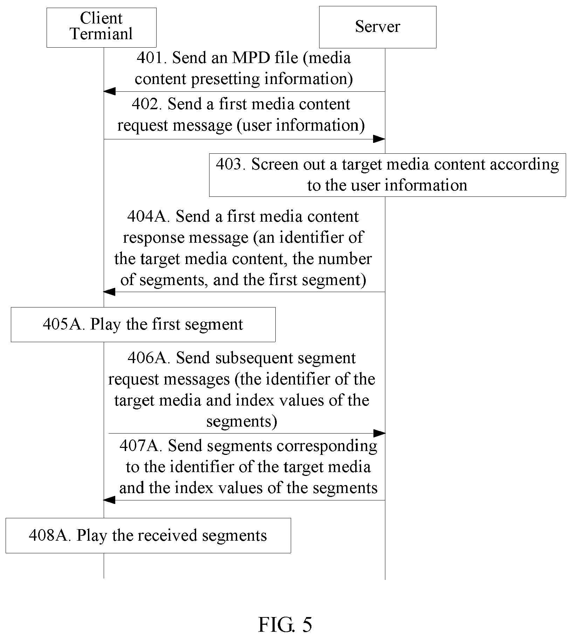

Further, as shown in FIG. 5, the above steps 404-406 may also be replaced with the following steps 404A-408A for implementation:
404A. The server sends a first media content response message to the client terminal, where the first media content response message includes an identifier, the number of segments, and a first segment content of the target media content.

For example, the format of the first media content response message may be expressed as follows:

```
 HTTP/1.1 200 OK
 Content-Type: multipart/mixed; boundary="abracadabra"
 Content-length: 1080
 --abracadabra
 Content-Type: video/3gpp
 ...moof...mfhd.... tfra......trun.......
 --abracadabra
 Content-Type: text/plain
 segmentNumber=4& Contentindex=9
 --abracadabra
```

Where "...moof...mfhd.... tfra......trun......" indicates the first segment content, "segmentNumber" indicates the number of segments, and "contentlndex" indicates a media content index.

405A. The client terminal plays the first segment content of the target media content after receiving the first media content response message.

406A. According to the media content obtaining information, send subsequent segment request messages carrying the identifier of the target media and index values of the segments.

For example, the structure of the subsequent segment request messages may be expressed as follows:

```
 GET /Adselect/33/%Contentindex%/%index%
 Host: www.example.com
```

The media content obtaining information is composed of a media content obtaining address and an identifier of the insertion position of the media content; "www.example.com/Adselect" in the message body indicates the media content obtaining address; "33" in the message body indicates the identifier of the insertion position of the media content; "Contentindex" in the message body indicates the identifier of the target media and comes from the first media content response message in step 404A; and "index" in the message body indicates the segment index, where the segment index is not greater than the number of segments.

407A. The server sends segment contents corresponding to the identifier of the target media and the index values of the segments to the client terminal.

For example, specifically the following response message format may be used to return segment contents corresponding to the identifier of the target media and the index values of the segments:

```
 HTTP/1.1 200 OK
 Content-Type: video/3gpp
 Content-length: 1080
 ...moof...mfhd.... tfra......trun......
```

Where "...moot..mfhd.... tfra......trun......" indicates segment contents corresponding to the identifier of the target media and the index values of the segments.

408A. The client terminal plays the received segment contents.

Afterwards, the above steps of 406A-408A are repeated until the client terminal obtains all segments of the target media content.

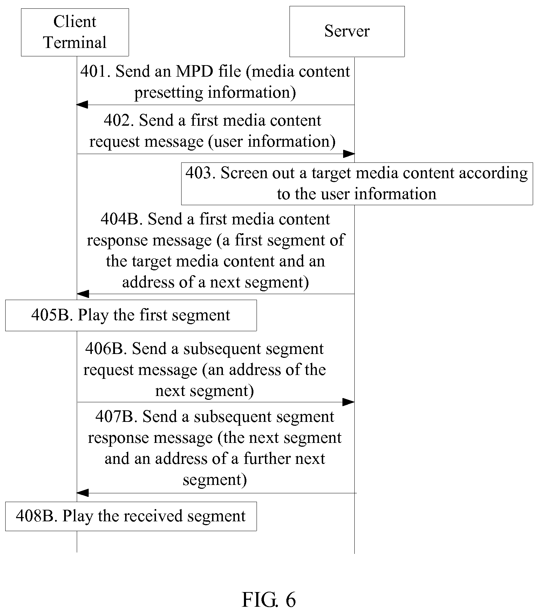

Further, as shown in FIG. 6, the above steps 404-406 may also be replaced with the following steps 404B-408B for implementation:
404B. Send a first media content response message to the client terminal, where the first media content response message includes a first segment content and an address of a next segment of the target media content.

For example, the format of the first media content response message may be expressed as follows:

```
 HTTP/1.1 200 OK
 Content-Type: video/3gpp
 Content-length: 1080
 ...moo...mfhd.... tfra......trun....... urld
 http:// www.adserver.com/file/adseg-2.3gp
```

In the example, a box is extended to implement encapsulation of the address of the next segment of the media content, where urld is an extended box, and the extended box is placed in the moof and describes the address of the next segment by using a field, and "http:// www.adserver.com/file/adseg-2.3gp" indicates the address of the next segment of the media content.

405B. The client terminal plays the first segment content of the target media content after receiving the first media content response message.

406B. The client terminal sends a subsequent segment request message according to the address of the next segment.

For example, the structure of the subsequent segment request message may be expressed as follows:

```
 GET file/adseg-2.3gp
 Host: www.adserver.com
```

407B. The server sends a next segment response message, where the next segment response message carries a next segment content and an address of a further next segment. The format of the next segment response message is the same as that of the first response message in the above step 405B.

408B. The client terminal plays the received segment content. Afterwards, the above steps 406B-408B are repeated until the client terminal obtains all segments of the target media content.

Further, the "Period" carrying media content presetting information in the MPD file received by the client terminal in the above step 402, addresses of program segments are described by "Url". In the actual application, the above addresses of the program segments may also be described by "UrlTemplate". In this case, the value of "Ad-Insertlndex" needs to be defined when media content presetting information is described by "Adlnfo". The description about the "Period" carrying media content presetting information is expressed as follows:

```
 <Period start="PT30S">
        <Representation
            mimeType="video/3gpp; codecs=mp4v.20.9, mp4a.E1"
            bandwidth="256000">
 <SegmentInfo>
 <UrlTemplate sourceUrl="http://www.example.com/program/$Index$.3gp"/>
 <AdInfo ad-sourceURL=http://www.example.com/Adselect/33
 ad-InsertIndex=3/>
 </SegmentInfo>
        </Representation>
    </Period>
```

Where addresses of program segments in the "SegmentInfo" are described by "UrlTemplate", and media content obtaining information is described by "ad-sourceURL", where "ad-sourceURL" is defined as http://www.example.com/Adselect/33. "ad-Insertlndex" defines the insertion index of the media content segments in the program segments. For previous example, "ad-Insertlndex=3", the client terminal needs to first request the program content segments of "index=1" and "index=2", and then request the media content when "ad-InsertIndex=3".

It should be noted that when addresses of the program segments are described by UrlTemplate, sending of the first media content request message and the subsequent processing are the same as the sending and subsequent processing in the case that the program segment addresses are described by Url in step 402, and are not further described herein. After the client terminal receives all segment contents of the target media, begin with index value 3, the client terminal requests program segment contents again according to the index values of the program segments.

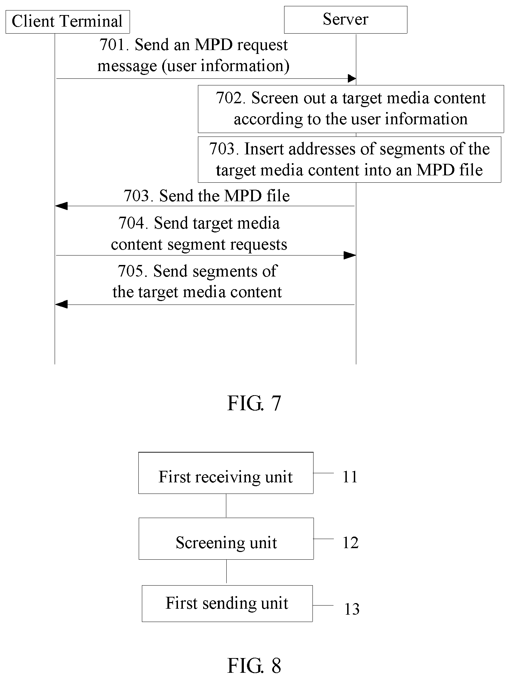

The above method for dynamic media content insertion based on HTTP streaming is implemented by using mode 1. The process of implementing customized media content insertion by using mode 2 is described hereunder. As shown in FIG. 7, the method includes:
701. A client terminal sends user information to the server through an MPD request message.
702. The server receives the MPD request message, and screens out target media content according to the user information.
703. The server divides the target media content, inserts addresses of segments of the target media content and addresses of program segments into an MPD file, and sends the MPD file that carries inserted addresses of segments of the target media content to the client terminal.
704. The client terminal receives the MPD file, and sends target media content segment requests one by one according to the sequence of addresses of segments of the target media content in the MPD file.
705. The server sends the corresponding segments of the target media content to the client terminal when receiving the target media content segment requests.

It should be noted that the MPD file mentioned in step 303 may also carrys inserted addresses of program segments, and the client terminal sends segment requests one by one according to the sequence of addresses of segments of the target media content and addresses of program segments in the MPD file. If the client terminal receives a program segment, the client terminal plays the content of the program segment; or if a segment of the target media content is received, the client terminal plays the content of the media content segment, so that customized media contents can be dynamically inserted in the process of playing program streams. Meanwhile, because segments of the target media content inserted into the MPD file received by the user in the above embodiment are obtained by screening according to the user information, different users receive different segments, thus implementing customized media content insertion.

Correspondingly, an embodiment of the present invention further provides an apparatus for dynamic media content insertion based on HTTP streaming, where the apparatus may be specifically a server. As shown in FIG. 8, the apparatus includes a first receiving unit 11, a screening unit 12, and a first sending unit 13.

The first receiving unit 11 is configured to receive a request message that is sent by a client terminal and carries user information; the screening unit 12 is configured to screen out a target media content from locally stored media contents according to the user information; and the first sending unit 13 is configured to send the target media content to the client terminal.

The target media content includes: an advertisement or a trailer of a program, one of subplots of a program, or any combination thereof.

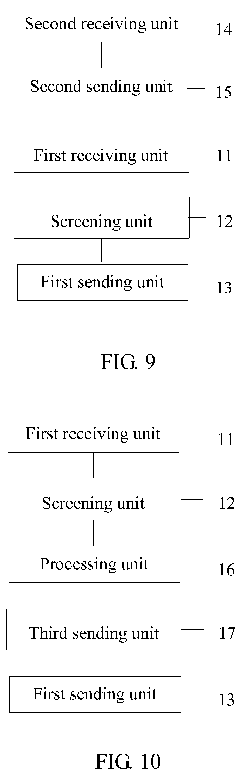

Further, as shown in FIG. 9, when the apparatus implements dynamic customized media content insertion by using mode 1, the apparatus includes a second receiving unit 14 and a second sending unit 15.

Before the first receiving unit 11 receives a request message that is sent by the client terminal and carries user information, the second receiving unit 14 is configured to receive an MPD request message sent by the client terminal; and the second sending unit 15 is configured to send an MPD file that carries inserted media content presetting information to the client terminal.

It should be noted that the media content presetting information may be located in the MPD file, specifically in "Period", or located in "Representation" under the "Period", or located in "SegmentInfo", where "SegmentInfo" is under the "Representation", and "Representation" is under the "Period" .

The media content presetting information includes: media content obtaining information and an insertion position of a first media content segment; the insertion position of the first media content segment may be insertion time or an insertion index relative to a program segment. The media content obtaining information includes an identifier of the insertion position of the media content.

The MPD file may refer to the above Table 1.

When mode 1 is used, the first receiving unit 11 is specifically configured to receive a first media content request message that carries user information , first media content request message is sent by the client terminal, and the client terminal is according to the media content obtaining information and.

In this case, when mode 1 is used, the screening unit 12 includes: an obtaining module and a screening module (not illustrated in FIG. 9).

The obtaining module is configured to obtain insertion position information of the media content according to the identifier of the insertion position of the media content in the media content obtaining information, where the insertion position information of the media content includes a duration of the insertion position of the media content and a program associated with the insertion position of the media content.

The screening module is configured to screen out the target media content from the locally stored media contents according to the user information and the insertion position information of the media content.

When mode 1 is used, the first sending unit 13 includes at least one of the following modules: a first sending module, a second sending module, and a third sending module.

The first sending module is configured to: send a first media content response message to the client terminal, where the first media content response message includes addresses of all segments of the target media content; and after subsequent segment request messages sent by the client terminal according to the addresses of the segments are received, send segment contents corresponding to the addresses of the segments to the client terminal.

The second sending module is configured to: send a first media content response message to the client terminal, where the first media content response message includes an identifier, the number of segments, and a first segment of the target media content; and after subsequent segment request messages that are sent by the client terminal according to the media content obtaining information and carry the identifier of the target media and index values of the segments are received, send segment contents corresponding to the identifier of the target media and the index values of the segments to the client terminal.

The third sending module is configured to: send a first media content response message to the client terminal, where the first media content response message includes a first segment and an address of a next segment of the target media content; and after a subsequent segment request message sent by the client terminal according to the address of the next segment is received, send a subsequent segment response message, where the subsequent segment response message carries the next segment and an address of a further next segment.

Further, as shown in FIG. 10, when the apparatus implements dynamic customized media content insertion by using mode 2, the apparatus includes a processing unit 16 and a third sending unit 17.

After the first receiving unit 11 receives a MPD request message that is sent by the client terminal and carries user information and the screening unit 12 screens out the target media content, the processing unit 16 is configured to insert addresses of segments of the target media content into an MPD file; and the third sending unit 17 is configured to send the MPD file carrying the inserted addresses of segments of the target media content to the client terminal.

When the first receiving unit 11 receives segment requests sent by the client terminal according to the addresses of segments of the target media content, the first sending unit 13 is specifically configured to send media contents corresponding to the addresses of segments to the client terminal.

It should be noted that the MPD file sent by the third sending unit 17 may also carry inserted addresses of program segments. In this case, if the server receives segment requests sent by the client terminal according to addresses of program segments, the server sends program segments to the client terminal.

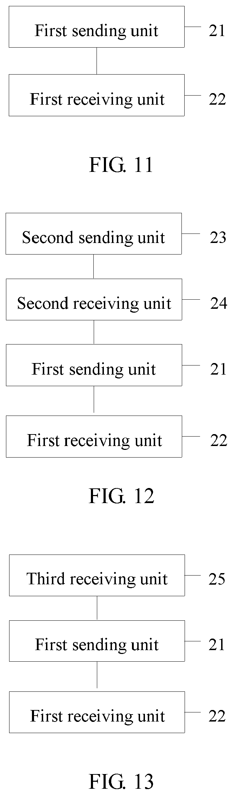

An embodiment shown in FIG. 11 provides an apparatus for dynamic media content insertion based on HTTP streaming, where the apparatus may be specifically a client terminal and includes: a first sending unit 21 and a first receiving unit 22.

The first sending unit 21 is configured to send a request message carrying user information to a server; and the first receiving unit 22 is configured to receive a media content that is sent by the server and matches the user information, and play the media content.

Further, when the apparatus implements dynamic customized media content reception by using mode 1, as shown in FIG. 12, the apparatus further includes a second sending unit 23 and a second receiving unit 24.

Before the first sending unit 21 sends a request message that carries user information to the server, the second sending unit 23 is configured to send an MPD request message to the server; and the second receiving unit 24 is configured to receive an MPD file that is sent by the server and carries inserted media content presetting information.

It should be noted that the media content presetting information may be located in the MPD file, specifically in "Period", or located in "Representation" under the "Period", or located in "SegmentInfo", where "SegmentInfo" id under the "Representation", and "Representation" is under the "Period" . The media content presetting information includes: media content obtaining information and an insertion position of a first media content segment; the insertion position of the first media content segment may be insertion time or an insertion index relative to a program segment. The media content obtaining information includes an identifier of the insertion position of the media content.

The MPD file may refer to the above Table 1.

In this case, the first sending unit 21 is specifically configured to send, according to the media content obtaining information in the media content presetting information, a first media content request message that carries user information to the server when detecting that the MPD file includes the media content presetting information.

The first receiving unit 22 includes at least one of the following modules (not illustrated in FIG. 12): a first receiving module, a second receiving module, and a third receiving module.

The first receiving module is configured to: receive a first media content response message sent by the server, where the first media content response message includes addresses of all segments of the media content matching the user information; and after subsequent segment request messages are sent to the server according to the addresses of the segments, receive segment contents sent by the server.

The second receiving module is configured to: receive a first media content response message sent by the server, where the first media content response message includes an identifier, the number of segments, and a first segment of the media content matching the user information; and after subsequent segment request messages that carry the identifier of the media content and index values of the segments are sent to the server according to the media content obtaining information, receive segment contents sent by the server.

The third receiving module is configured to: receive a first media content response message sent by the server, where the first media content response message includes a first segment and an address of a next segment of the media content matching the user information; and after a subsequent segment request message is sent to the server according to the address of the next segment, receive a subsequent segment response message sent by the server, where the subsequent segment response message carries the next segment and an address of a further next segment, and repeat segment requests and responses until all segments of the media content are obtained.

Further, when the apparatus implements dynamic customized media content reception by using mode 2, the first sending unit 21 is specifically configured to send an MPD request message carrying user information to the server; in this case, as shown in FIG. 13, the apparatus further includes a third receiving unit 25, configured to receive an MPD file that is sent by the server and carries inserted addresses of segments of the media content matching the user information; and
the first sending unit 21 is further configured to send media content segment requests according to the addresses of the segments of the media content matching the user information, the first receiving unit 22 is specifically configured to receive media contents sent by the server.

It should be noted that because the MPD file received by the third receiving unit 25 may also carry inserted addresses of program segments, the client terminal sends segment requests one by one according to the sequence of addresses of segments of the target media content and addresses of program segments in the MPD file. If the client terminal receives a program segment, the client terminal plays the content of the program segment; or if a segment of the target media content is received, the client terminal plays the content of the segment of the media content.

With the apparatus for dynamic media content insertion based on HTTP streaming according to the above embodiments of the present invention, because segments of the media content received by the client terminal are obtained by screening by the server according to the user information, while the user information of different client terminals has differences in customization, different users can receive media content segments meeting respective requirements. Compared with the prior art in which all client terminals demanding a same program watch the same dynamic media content when the clients watch the program through HTTP streaming, embodiments of the present invention can enable all the client terminal demanding the same program to watch customized dynamic media contents meeting respective characteristics, thus solving the problem that customized insertion fails to be implemented when media contents are transmitted through HTTP streaming, so that customized insertion of dynamic media contents is implemented.

An embodiment of the present invention further provides a system for dynamic media content insertion based on HTTP streaming, including: the apparatus for dynamic media content insertion based on HTTP streaming shown in any one of FIGS. 8-10 and another apparatus for dynamic media content insertion based on HTTP streaming shown in any one of FIGS. 11-13.

The apparatus for dynamic media content insertion based on HTTP streaming according to any one of FIGS. 8-10 is specifically a server, configured to: receive a request message that is sent by a client terminal and carries user information; screen out a target media content from locally stored media contents according to the user information; and send the target media content to the client terminal so that the client terminal can play the target media content.

Another apparatus for dynamic media content insertion based on HTTP streaming shown in any one of FIGS. 11-13 is specifically a client terminal, configured to: send a request message that carries user information to a server; and receive a media content that is sent by the server and matches the user information, and play the media content.

In the system for dynamic media content insertion based on HTTP streaming, because the media content received by the client terminal is obtained by screening by the server according to the user information, while the user information of different client terminals has differences in customization, different users can receive media contents meeting respective requirements. Compared with the prior art in which all client terminals demanding a same program watch the same dynamic media content when the client terminals watch the program through HTTP streaming, embodiments of the present invention can enable all the client terminals demanding the same program to watch customized dynamic media contents meeting respective characteristics, thus solving the problem that customized insertion fails to be implemented when media contents are transmitted through HTTP streaming, so that customized insertion of dynamic media contents is implemented.

Embodiments of the present invention are mainly applied to the process of dynamic media content insertion. When the client terminal watches a program through HTTP streaming, the customized insertion of the media content can be implemented.

Through the description of the foregoing embodiments, persons skilled in the art may clearly understand that the present invention may be implemented by software in addition to necessary general hardware, or by hardware only, but the former is preferred in most circumstances. Based on such understanding, the technical solutions of the present invention in essence or the portions contributing to the prior art can be embodied in the form of a software product. The computer software product is stored in a readable storage medium, such as a computer floppy disk, a hard disk, or a Compact Disc Read-Only Memory (CD-ROM), including several instructions to cause a computer device (which may be a personal computer, a server, or a network device) to execute the method described in each embodiment of the present invention.

The foregoing descriptions are merely exemplary embodiments of the present invention, but not intended to limit the present invention. Any variation or replacement made by persons skilled in the art without departing from the scope of the present invention should fall within the protection scope of the present invention. Therefore, the protection scope of the present invention is subject to the protection scope of the claims.

## Claims

1. A method for dynamic media content insertion based on Hypertext Transfer Protocol, HTTP, streaming, wherein dynamic media contents are transmitted through HTTP streaming and a program segment is being played on a client terminal, and the method comprises:
receiving (401), by a server, a media presentation description, MPD, request message from the client terminal, and sending an MPD file that carries inserted media content presetting information to the client terminal, wherein the media content presetting information comprises: media content obtaining information and an insertion position of a first media content segment, wherein the insertion position of the first media content segment is an insertion time or an insertion index value relative to the program segment;
receiving (201), by the server, a request message that is sent by the client terminal and carries user information;
wherein the receiving (201), by the server, the request message that is sent by the client terminal and carries the user information comprises: receiving (402) a first media content request message that is sent by the client terminal according to the media content obtaining information when the insertion time or the insertion index value indicated by the insertion position of the first media content segment is met and carries the user information;
screening (202, 403), by the server, out a target media content from locally stored media contents according to the user information; and
sending (203) the target media content to the client terminal so that the client terminal can play the target media content at the insertion time or the insertion index value indicated by the insertion position of the first media content segment.

2. The method for dynamic media content insertion based on HTTP streaming according to claim 1, wherein the media content presetting information is located in a period "Period", or located in description information "Representation" under the "Period", or located in segment information "SegmentInfo" where "SegmentInfo" is under the "Representation", and "Representation" is under the "Period".

3. The method for dynamic media content insertion based on HTTP streaming according to claim 1, wherein the media content obtaining information comprises an identifier of the insertion position of the media content.

4. The method for dynamic media content insertion based on HTTP streaming according to claim 3, wherein the screening (202, 403) out a target media content from locally stored media contents according to the user information comprises:
obtaining insertion position information of the media content according to the identifier of the insertion position of the media content in the media content obtaining information, wherein the insertion position information of the media content comprises a duration of the insertion position of the media content and a program associated with the insertion position of the media content; and
screening out the target media content from the locally stored media contents according to the user information and the insertion position information of the media content.

5. The method for dynamic media content insertion based on HTTP streaming according to claim 1 or 3, wherein the sending the target media content to the client terminal comprises:
sending (404) a first media content response message to the client terminal, wherein the first media content response message comprises addresses of all segments of the target media content; and after receiving subsequent media content segment request messages sent by the client terminal one by one according to the addresses of the segments, sending segment contents corresponding to the addresses of the segments to the client terminal; or
sending (404A) a first media content response message to the client terminal, wherein the first media content response message comprises an identifier, the number of segments, and a content of a first segment of the target media content; and after receiving subsequent segment request messages that are sent by the client terminal according to the media content obtaining information and carry the identifier of the target media and index values of the segments, sending segment contents corresponding to the identifier of the target media and the index values of the segments to the client terminal; or
sending (404B) a first media content response message to the client terminal, wherein the first media content response message comprises a first segment content and an address of a next segment of the target media content; and after receiving a segment request message sent by the client terminal according to the address of the next segment, sending a next segment response message, wherein the next segment response message carries a next segment content and an address of a further next segment, and repeating segment requests and responses until all segments of the media content are obtained.

6. The method for dynamic media content insertion based on HTTP streaming according to claim 1, wherein: the receiving a request message that is sent by the client terminal and carries user information comprises: receiving an MPD request message that is sent by the client terminal and carries user information;
after screening out the target media content from the locally stored media contents according to the user information, the method further comprises: inserting addresses of segments of the target media content into an MPD file; and sending the MPD file that carries the inserted addresses of the segments of the target media content to the client terminal; and
the sending the target media content to the client terminal comprises: when receiving segment requests sent by the client terminal according to the addresses of the segments of the target media content, sending media contents corresponding to the addresses of the segments to the client terminal.

7. An apparatus for dynamic media content insertion based on Hypertext Transfer Protocol, HTTP, streaming, wherein dynamic media contents are transmitted through HTTP streaming and a program segment is being played on a client terminal, and the apparatus comprises:
a first receiving unit (11), configured to receive a request message that is sent by the client terminal and carries user information; wherein the first receiving unit is specifically configured to receive a first media content request message, as the request message, that is sent by the client terminal according to media content obtaining information when an insertion time or an insertion index value indicated by an insertion position of a first media content segment is met and carries the user information;
a screening unit (12), configured to screen out a target media content from locally stored media contents according to the user information;
a first sending unit (13), configured to send the target media content to the client terminal, wherein the target media content can be played at the insertion time or the insertion index value indicated by the insertion position of the first media content segment by the client terminal; and
a second receiving unit (14) and a second sending unit (15), wherein:
the second receiving unit (14) is configured to receive a media presentation description, MPD, request message sent by the client terminal before the first receiving unit receives the request message that is sent by the client terminal and carries the user information; and the second sending unit (15) is configured to send an MPD file that carries inserted media content presetting information to the client terminal;
wherein the media content presetting information comprises: the media content obtaining information and the insertion position of the first media content segment, wherein the insertion position of the first media content segment is the insertion time or the insertion index value relative to the program segment.

8. The apparatus for dynamic media content insertion based on HTTP streaming according to claim 7, wherein the media content obtaining information comprises an identifier of the insertion position of the media content.

9. The apparatus for dynamic media content insertion based on HTTP streaming according to claim 8, wherein the screening unit comprises:
an obtaining module, configured to obtain insertion position information of the media content according to the identifier of the insertion position of the media content in the media content obtaining information, wherein the insertion position information of the media content comprises a duration of the insertion position of the media content and a program associated with the insertion position of the media content; and
a screening module, configured to screen out the target media content from the locally stored media contents according to the user information and the insertion position information of the media content.

10. The apparatus for dynamic media content insertion based on HTTP streaming according to claim 7 or 8, wherein the first sending unit comprises at least one of the following modules:
a first sending module, configured to: send a first media content response message to the client terminal, wherein the first media content response message comprises addresses of all segments of the target media content; and after subsequent segment request messages sent by the client terminal according to the addresses of the segments are received, send segment contents corresponding to the addresses of the segments to the client terminal;
a second sending module, configured to: send a first media content response message to the client terminal, wherein the first media content response message comprises an identifier, the number of segments, and a first segment of the target media content; and after subsequent segment request messages that are sent by the client terminal according to the media content obtaining information and carry the identifier of the target media and index values of the segments are received, send segment contents corresponding to the identifier of the target media and the index values of the segments to the client terminal; and
a third sending module, configured to: send a first media content response message to the client terminal, wherein the first media content response message comprises a first segment and an address of a next segment of the target media content; and after a subsequent segment request message sent by the client terminal according to the address of the next segment is received, send a subsequent segment response message, wherein the subsequent segment response message carries the next segment and an address of a further next segment.

11. The apparatus for dynamic media content insertion based on HTTP streaming according to claim 7, wherein: the first receiving unit is specifically configured to receive an MPD request message that is sent by the client terminal and carries user information;
the apparatus further comprises a processing unit and a third sending unit, wherein the processing unit is configured to insert addresses of segments of the target media content into an MPD file, and the third sending unit is configured to send the MPD file that carries the inserted addresses of the segments of the target media content to the client terminal;
when the first receiving unit receives segment requests sent by the client terminal according to the addresses of the segments of the target media content, the first sending unit is specifically configured to send media contents corresponding to the addresses of the segments to the client terminal.

## Patentansprüche

1. Verfahren zur dynamischen Einfügung von Medieninhalten in einen HTTP, Hypertext Transfer Protocol, -Stream, wobei dynamische Medieninhalte durch HTTP-Streaming übertragen werden und ein Programmsegment auf einem Kundenendgerät abgespielt wird, und das Verfahren Folgendes umfasst:
Empfangen (401), durch einen Server, einer Medienpräsentationsbeschreibungs-, MPD - *Media Presentation Description,* Anfragenachricht von dem Kundenendgerät, und Senden einer MPD-Datei, die eingefügte Medieninhalt-Voreinstellungsinformationen enthält, an das Kundenendgerät, wobei die Medieninhalt-Voreinstellungsinformationen Folgendes umfassen: Medieninhalt-Erhaltinformationen und eine Einfügungsposition eines ersten Medieninhaltssegmentes, wobei die Einfügungsposition des ersten Medieninhaltssegmentes eine Einfügungszeit oder ein Einfügungsindexwert in Bezug auf das Programmsegment ist;
Empfangen (201), durch den Server, einer Anfragenachricht, die durch das Kundenendgerät gesendet wird und Benutzerinformationen enthält;
wobei das Empfangen (201), durch den Server, der Anfragenachricht, die durch das Kundenendgerät gesendet wird und die Benutzerinformationen enthält, Folgendes umfasst: Empfangen (402) einer ersten Medieninhalt-Anfragenachricht, die durch das Kundenendgerät entsprechend der Medieninhalt-Erhaltinformationen gesendet wird, wenn die Einfügungszeit oder der Einfügungsindexwert, die durch die Einfügungsposition des ersten Medieninhaltssegmentes angegeben werden, erfüllt wird, und die Benutzerinformationen enthält;
Herausfiltern (202, 403), durch den Server, von Zielmedieninhalten aus lokal gespeicherten Medieninhalten entsprechend der Benutzerinformationen; und
Senden (203) der Zielmedieninhalte an das Kundenendgerät, sodass das Kundenendgerät die Zielmedieninhalte bei der Einfügungszeit oder dem Einfügungsindexwert, der durch die Einfügungsposition des ersten Medieninhaltssegmentes angegeben wird, abspielen kann.

2. Verfahren zur dynamischen Einfügung von Medieninhalten in einen HTTP-Stream nach Anspruch 1, wobei sich die Medieninhalt-Voreinstellungsinformationen in einem Zeitraum "Zeitraum" befinden oder sich in Beschreibungsinformationen "Darstellung" unter dem "Zeitraum" befinden oder sich in Segmentinformationen "Segmentinfo" befinden, wobei sich "Segmentinfo" unter "Darstellung" befindet und sich "Darstellung" unter "Zeitraum" befindet.

3. Verfahren zur dynamischen Einfügung von Medieninhalten in einen HTTP-Stream nach Anspruch 1, wobei die Medieninhalt-Erhaltinformationen einen Identifikator der Einfügungsposition der Medieninhalte umfassen.

4. Verfahren zur dynamischen Einfügung von Medieninhalten in einen HTTP-Stream nach Anspruch 3, wobei das Herausfiltern (202, 403) von Zielmedieninhalten aus lokal gespeicherten Medieninhalten entsprechend der Benutzerinformationen Folgendes umfasst:
Erhalten von Einfügungspositionsinformationen der Medieninhalte entsprechend des Identifikators der Einfügungsposition der Medieninhalte in den Medieninhalt-Erhaltinformationen, wobei die Einfügungspositionsinformationen der Medieninhalte eine Dauer der Einfügungsposition der Medieninhalte und ein Programm im Zusammenhang mit der Einfügungsposition der Medieninhalte umfassen; und
Herausfiltern der Zielmedieninhalte aus den lokal gespeicherten Medieninhalten entsprechend der Benutzerinformationen und der Einfügungspositionsinformationen der Medieninhalte.

5. Verfahren zur dynamischen Einfügung von Medieninhalten in einen HTTP-Stream nach Anspruch 1 oder 3, wobei das Senden der Zielmedieninhalte an das Kundenendgerät Folgendes umfasst:
Senden (404) einer ersten Medieninhalt-Antwortnachricht an das Kundenendgerät, wobei die erste Medieninhalt-Antwortnachricht Adressen aller Segmente der Zielmedieninhalte umfasst; und nach dem Empfangen nachfolgender Medieninhaltssegment-Anfragenachrichten, die nacheinander entsprechend der Adressen der Segmente durch das Kundenendgerät gesendet werden, Senden von Segmentinhalten entsprechend der Adressen der Segmente an das Kundenendgerät; oder
Senden (404A) einer ersten Medieninhalt-Antwortnachricht an das Kundenendgerät, wobei die erste Medieninhalt-Antwortnachricht einen Identifikator, die Zahl der Segmente und den Inhalt eines ersten Segmentes der Zielmedieninhalte umfasst; und nach dem Empfangen nachfolgender Segmentanfragenachrichten, die durch das Kundenendgerät entsprechend der Medieninhalt-Erhaltinformationen gesendet werden und den Identifikator der Zielmedieninhalte und Indexwerte der Segmente enthalten, Senden von Segmentinhalten entsprechend des Identifikators der Zielmedieninhalte und der Indexwerte der Segmente an das Kundenendgerät; oder Senden (404B) einer ersten Medieninhalt-Antwortnachricht an das Kundenendgerät, wobei die erste Medieninhalt-Antwortnachricht einen ersten Segmentinhalt und die Adresse eines nächsten Segmentes der Zielmedieninhalte umfasst; und nach dem Empfangen einer Segmentanfragenachricht, die durch das Kundenendgerät entsprechend der Adresse des nächsten Segmentes gesendet wird, Senden einer nächsten Segmentantwortnachricht, wobei die nächste Segmentantwortnachricht einen nächsten Segmentinhalt und die Adresse eines weiteren nächsten Segmentes enthält, und Wiederholen der Segmentanfragen und -antworten, bis alle Segmente der Medieninhalte erhalten wurden.

6. Verfahren zur dynamischen Einfügung von Medieninhalten in einen HTTP-Stream nach Anspruch 1, wobei: das Empfangen einer Anfragenachricht, die durch das Kundenendgerät gesendet wird und Benutzerinformationen enthält, Folgendes umfasst: Empfangen einer MPD-Anfragenachricht, die durch das Kundenendgerät gesendet wird und Benutzerinformationen enthält;
nach dem Herausfiltern der Zielmedieninhalte aus den lokal gespeicherten Medieninhalten entsprechend der Benutzerinformationen, das Verfahren ferner Folgendes umfasst: Einfügen der Adressen von Segmenten der Zielmedieninhalte in eine MPD-Datei; und Senden der MPD-Datei, welche die eingefügten Adressen der Segmente der Zielmedieninhalte enthält, an das Kundenendgerät; und
das Senden der Zielmedieninhalte an das Kundenendgerät Folgendes umfasst: wenn Segmentanfragen empfangen werden, die durch das Kundenendgerät entsprechend der Adressen der Segmente der Zielmedieninhalte gesendet werden, Senden der Medieninhalte entsprechend der Adressen der Segmente an das Kundenendgerät.

7. Vorrichtung zur dynamischen Einfügung von Medieninhalten in einen HTTP, Hypertext Transfer Protocol, -Stream, wobei dynamische Medieninhalte durch HTTP-Streaming übertragen werden und ein Programmsegment auf einem Kundenendgerät abgespielt wird, und die Vorrichtung Folgendes umfasst:
eine erste Empfangseinheit (11), die konfiguriert ist zum Empfangen einer Anfragenachricht, die durch das Kundenendgerät gesendet wird und Benutzerinformationen enthält; wobei die erste Empfangseinheit spezifisch konfiguriert ist zum Empfangen einer ersten Medieninhalt-Anfragenachricht als die Anfragenachricht, die durch das Kundenendgerät entsprechend Medieninhalt-Erhaltinformationen gesendet wird, wenn eine Einfügungszeit oder ein Einfügungsindexwert, die durch eine Einfügungsposition eines ersten Medieninhaltssegmentes angegeben werden, erfüllt wird, und die Benutzerinformationen enthält;
eine Filtereinheit (12), die konfiguriert ist zum Herausfiltern von Zielmedieninhalten aus lokal gespeicherten Medieninhalten entsprechend der Benutzerinformationen;
eine erste Sendeeinheit (13), die konfiguriert ist zum Senden der Zielmedieninhalte an das Kundenendgerät, wobei die Zielmedieninhalte bei der Einfügungszeit oder bei dem Einfügungsindexwert, die durch die Einfügungsposition des ersten Medieninhaltssegmentes angegeben werden, durch das Kundenendgerät abgespielt werden können; und
eine zweite Empfangseinheit (14) und eine zweite Sendeeinheit (15), wobei:
die zweite Empfangseinheit (14) konfiguriert ist zum Empfangen einer Medienpräsentationsbeschreibungs-, MPD - *Media Presentation Description,* Anfragenachricht, die durch das Kundenendgerät gesendet wird, bevor die erste Empfangseinheit die Anfragenachricht, die durch das Kundenendgerät gesendet wird und die Benutzerinformationen enthält, empfängt; und die zweite Sendeeinheit (15) konfiguriert ist zum Senden einer MPD-Datei, die eingefügte Medieninhalt-Voreinstellungsinformationen enthält, an das Kundenendgerät;
wobei die Medieninhalt-Voreinstellungsinformationen Folgendes umfassen: die Medieninhalt-Erhaltinformationen und die Einfügungsposition des ersten Medieninhaltssegmentes, wobei die Einfügungsposition des ersten Medieninhaltssegmentes die Einfügungszeit oder der Einfügungsindexwert in Bezug auf das Programmsegment ist.

8. Vorrichtung zur dynamischen Einfügung von Medieninhalten in einen HTTP-Stream nach Anspruch 7, wobei die Medieninhalt-Erhaltinformationen einen Identifikator der Einfügungsposition der Medieninhalte umfassen.

9. Vorrichtung zur dynamischen Einfügung von Medieninhalten in einen HTTP-Stream nach Anspruch 8, wobei die Filtereinheit Folgendes umfasst:
ein Erhaltmodul, das konfiguriert ist zum Erhalten von Einfügungspositionsinformationen der Medieninhalte entsprechend des Identifikators der Einfügungsposition der Medieninhalte in den Medieninhalt-Erhaltinformationen, wobei die Einfügungspositionsinformationen der Medieninhalte eine Dauer der Einfügungsposition der Medieninhalte und ein Programm im Zusammenhang mit der Einfügungsposition der Medieninhalte umfassen; und
ein Filtermodul, das konfiguriert ist zum Herausfiltern der Zielmedieninhalte aus den lokal gespeicherten Medieninhalten entsprechend der Benutzerinformationen und der Einfügungspositionsinformationen der Medieninhalte.

10. Vorrichtung zur dynamischen Einfügung von Medieninhalten in einen HTTP-Stream nach Anspruch 7 oder 8, wobei die erste Sendeeinheit mindestens eines der folgenden Module umfasst:
ein erstes Sendemodul, das konfiguriert ist zum Senden einer ersten Medieninhalt-Antwortnachricht an das Kundenendgerät, wobei die erste Medieninhalt-Antwortnachricht Adressen aller Segmente der Zielmedieninhalte umfasst; und
nachdem nachfolgende Segmentanfragenachrichten, die durch das Kundenendgerät entsprechend der Adressen der Segmente gesendet werden, empfangen wurden, Senden der Segmentinhalte entsprechend der Adressen der Segmente an das Kundenendgerät;
ein zweites Sendemodul, das konfiguriert ist zum Senden einer ersten Medieninhalt-Antwortnachricht an das Kundenendgerät, wobei die erste Medieninhalt-Antwortnachricht einen Identifikator, die Zahl der Segmente und ein erstes Segment der Zielmedieninhalte umfasst; und nachdem nachfolgende Segmentanfragenachrichten, die durch das Kundenendgerät entsprechend der Medieninhalt-Erhaltinformationen gesendet werden und den Identifikator der Zielmedieninhalte und Indexwerte der Segmente enthalten, empfangen wurden, Senden von Segmentinhalten entsprechend des Identifikators der Zielmedieninhalte und der Indexwerte der Segmente an das Kundenendgerät; und
ein drittes Sendemodul, das konfiguriert ist zum Senden einer ersten Medieninhalt-Antwortnachricht an das Kundenendgerät, wobei die erste Medieninhalt-Antwortnachricht ein erstes Segment und die Adresse eines nächsten Segmentes der Zielmedieninhalte umfasst; und nachdem eine nachfolgende Segmentanfragenachricht, die durch das Kundenendgerät entsprechend der Adresse des nächsten Segmentes gesendet wird, empfangen wurde, Senden einer nachfolgenden Segmentantwortnachricht, wobei die nachfolgende Segmentantwortnachricht das nächste Segment und die Adresse eines weiteren nächsten Segmentes enthält.

11. Vorrichtung zur dynamischen Einfügung von Medieninhalten in einen HTTP-Stream nach Anspruch 7, wobei: die erste Empfangseinheit spezifisch konfiguriert ist zum Empfangen einer MPD-Anfragenachricht, die durch das Kundenendgerät gesendet wird und Benutzerinformationen enthält;
die Vorrichtung ferner eine Verarbeitungseinheit und eine dritte Sendeeinheit umfasst, wobei die Verarbeitungseinheit konfiguriert ist zum Einfügen der Adressen von Segmenten der Zielmedieninhalte in eine MPD-Datei, und die dritte Sendeeinheit konfiguriert ist zum Senden der MPD-Datei, welche die eingefügten Adressen der Segmente der Zielmedieninhalte enthält, an das Kundenendgerät;
wenn die erste Empfangseinheit Segmentanfragen, die durch das Kundenendgerät entsprechend der Adressen der Segmente der Zielmedieninhalte gesendet werden, empfängt, die erste Sendeeinheit spezifische konfiguriert ist zum Senden von Medieninhalten entsprechend der Adressen der Segmente an das Kundenendgerät.

## Revendications

1. Procédé pour une insertion de contenu multimédia dynamique basé sur une diffusion en continu par protocole de transfert hypertexte (HTTP), dans lequel des contenus multimédias dynamiques sont transmis au moyen d'une diffusion en continu par protocole HTTP et un segment de programme est lu sur un terminal client, et le procédé consiste :
à recevoir (401), au moyen d'un serveur, un message de demande de description de présentation multimédia (MPD) en provenance du terminal client et à envoyer un fichier de description MPD qui comporte des informations de préréglage de contenu multimédia inséré au terminal client, dans lequel les informations de préréglage de contenu multimédia comportent : des informations d'obtention de contenu multimédia et une position d'insertion d'un premier segment de contenu multimédia, dans lequel la position d'insertion du premier segment de contenu multimédia est un moment d'insertion ou une valeur d'indice d'insertion par rapport au segment de programme ;
à recevoir (201), au moyen du serveur, un message de demande qui est envoyé par le terminal client et comporte des informations d'utilisateur ;
dans lequel la réception (201), par le serveur, du message de demande qui est envoyé par le terminal client et comporte les informations d'utilisateur consiste : à recevoir (402) un premier message de demande de contenu multimédia qui est envoyé par le terminal client en fonction des informations d'obtention de contenu multimédia lorsque le moment d'insertion ou la valeur d'indice d'insertion indiquée par la position d'insertion du premier segment de contenu multimédia est satisfait, ou satisfaite, et comporte les informations d'utilisateur ;
à filtrer (202, 403), au moyen du serveur, un contenu multimédia cible à partir de contenus multimédias stockés localement en fonction des informations d'utilisateur ; et
à envoyer (203) le contenu multimédia cible au terminal client de telle sorte que le terminal client puisse lire le contenu multimédia cible au moment d'insertion ou à la valeur d'indice d'insertion indiquée par la position d'insertion du premier segment de contenu multimédia.

2. Procédé pour une insertion de contenu multimédia dynamique basé sur une diffusion par protocole HTTP selon la revendication 1, dans lequel les informations de préréglage de contenu multimédia sont situées dans une période « Période », ou situées dans des informations de description « Représentation » selon la « Période », ou situées dans des informations de segment « InfoSegment », où « InfoSegment » se fait selon la « Représentation » et « Représentation » se fait selon la « Période ».

3. Procédé pour une insertion de contenu multimédia dynamique basé sur une diffusion par protocole HTTP selon la revendication 1, dans lequel les informations d'obtention de contenu multimédia comportent un identifiant de la position d'insertion du contenu multimédia.

4. Procédé pour une insertion de contenu multimédia dynamique basé sur une diffusion par protocole HTTP selon la revendication 3, dans lequel le filtrage (202, 403) d'un contenu multimédia filtre à partir de contenus multimédias stockés localement en fonction des informations d'utilisateur consiste :
à obtenir des informations de position d'insertion du contenu multimédia en fonction de l'identifiant de la position d'insertion du contenu multimédia dans les informations d'obtention de contenu multimédia, dans lequel les informations de position d'insertion du contenu multimédia comportent une durée de la position d'insertion du contenu multimédia et un programme associé à la position d'insertion du contenu multimédia ; et
à filtrer le contenu multimédia cible à partir des contenus multimédias stockés localement en fonction des informations d'utilisateur et des informations de position d'insertion du contenu multimédia.

5. Procédé pour une insertion de contenu multimédia dynamique basé sur une diffusion par protocole HTTP selon la revendication 1 ou 3, dans lequel l'envoi du contenu multimédia cible au terminal client consiste :
à envoyer (404) un premier message de réponse de contenu multimédia au terminal client, dans lequel le premier message de réponse de contenu multimédia comporte des adresses de tous les segments du contenu multimédia cible ; et après la réception des messages de demande de segment de contenu multimédia ultérieurs envoyés par le terminal client un par un en fonction des adresses des segments, à envoyer des contenus de segment correspondant aux adresses des segments au terminal client ; ou
à envoyer (404A) un premier message de réponse de contenu multimédia au terminal client, dans lequel le premier message de réponse de contenu multimédia comporte un identifiant, le nombre de segments et un contenu d'un premier segment du contenu multimédia cible ; et après la réception des messages de demande de segment ultérieurs qui sont envoyés par le terminal client en fonction des informations d'obtention de contenu multimédia et comportent l'identifiant du média cible et des valeurs d'indice des segments, à envoyer des contenus de segment correspondant à l'identifiant du média cible et aux valeurs d'indice des segments au terminal client ; ou
à envoyer (404B) un premier message de réponse de contenu multimédia au terminal client, dans lequel le premier message de réponse de contenu multimédia comporte un premier contenu de segment et une adresse d'un prochain segment du contenu multimédia cible ; et après la réception d'un message de demande de segment envoyé par le terminal client en fonction de l'adresse du prochain segment, à envoyer un message de réponse de prochain segment, dans lequel le message de réponse de prochain segment comporte un contenu de prochain segment et une adresse d'un autre prochain segment, et à répéter des demandes de segment et des réponses de segment jusqu'à ce que tous les segments du contenu multimédia soient obtenus.

6. Procédé pour une insertion de contenu multimédia dynamique basé sur une diffusion par protocole HTTP selon la revendication 1, dans lequel : la réception d'un message de demande qui est envoyé par le terminal client et comporte des informations d'utilisateur, consiste : à recevoir un message de demande de description MPD qui est envoyé par le terminal client et comporte des informations d'utilisateur ;
après le filtrage du contenu multimédia cible à partir des contenus multimédias stockés localement en fonction des informations d'utilisateur, le procédé consiste en outre : à insérer des adresses de segments du contenu multimédia cible dans un fichier de description MPD ; et à envoyer le fichier de description MPD qui comporte les adresses insérées des segments du contenu multimédia cible au terminal client ; et l'envoi du contenu multimédia cible au terminal client consiste : lors de la réception de demandes de segment envoyées par le terminal client en fonction des adresses des segments du contenu multimédia cible, à envoyer des contenus multimédias correspondant aux adresses des segments au terminal client.

7. Appareil pour une insertion de contenu multimédia dynamique basé sur une diffusion en continu par protocole de transfert hypertexte (HTTP), dans lequel des contenus multimédias dynamiques sont transmis au moyen d'une diffusion en continu par protocole HTTP et un segment de programme est lu sur un terminal client, et l'appareil comprend :
une première unité de réception (11), configurée pour recevoir un message de demande qui est envoyé par le terminal client et comporte des informations d'utilisateur ; dans lequel la première unité de réception est spécialement configurée pour recevoir un premier message de demande de contenu multimédia , en tant que message de demande, qui est envoyé par le terminal client en fonction d'informations d'obtention de contenu multimédia lorsqu'un moment d'insertion ou une valeur d'indice d'insertion indiquée par une position d'insertion d'un premier segment de contenu multimédia est satisfait, ou satisfaite, et comporte les informations d'utilisateur ;
une unité de filtrage (12), configurée pour filtrer un contenu multimédia cible à partir de contenus multimédias stockés localement en fonction des informations d'utilisateur ;
une première unité d'envoi (13), configurée pour envoyer le contenu multimédia cible au terminal client, dans lequel le contenu multimédia cible peut être lu au moment d'insertion ou à la valeur d'indice d'insertion indiquée par la position d'insertion du premier segment de contenu multimédia par le terminal client ; et
une seconde unité de réception (14) et une deuxième unité d'envoi (15), dans lequel :
la seconde unité de réception (14) est configurée pour recevoir un message de demande de description de présentation multimédia (MPD) envoyée par le terminal client avant que la première unité de réception ne reçoive le message de demande qui est envoyé par le terminal client et comporte les informations d'utilisateur ; et la deuxième unité d'envoi (15) est configurée pour envoyer un fichier de description MPD qui comporte des informations de préréglage de contenu multimédia inséré au terminal client ;
dans lequel les informations de préréglage de contenu multimédia comportent : les informations d'obtention de contenu multimédia et la position d'insertion du premier segment de contenu multimédia, dans lequel la position d'insertion du premier segment de contenu multimédia est le moment d'insertion ou la valeur d'indice d'insertion par rapport au segment de programme.

8. Appareil pour une insertion de contenu multimédia dynamique basé sur une diffusion en continu par protocole HTTP selon la revendication 7, dans lequel les informations d'obtention de contenu multimédia comportent un identifiant de la position d'insertion du contenu multimédia.

9. Appareil pour une insertion de contenu multimédia dynamique basé sur une diffusion en continu par protocole HTTP selon la revendication 8, dans lequel l'unité de filtrage comprend :
un module d'obtention, configuré pour obtenir des informations de position d'insertion du contenu multimédia en fonction de l'identifiant de la position d'insertion du contenu multimédia dans les informations d'obtention de contenu multimédia, dans lequel les informations de position d'insertion du contenu multimédia comportent une durée de la position d'insertion du contenu multimédia et
un programme associé à la position d'insertion du contenu multimédia ; et
un module de filtrage, configuré pour filtrer le contenu multimédia cible à partir des contenus multimédias stockés localement en fonction des informations d'utilisateur et des informations de position d'insertion du contenu multimédia.

10. Appareil pour une insertion de contenu multimédia dynamique basé sur une diffusion en continu par protocole HTTP selon la revendication 7 ou 8, dans lequel la première unité d'envoi comprend au moins l'un des modules suivants :
un premier module d'envoi, configuré : pour envoyer un premier message de réponse de contenu multimédia au terminal client, dans lequel le premier message de réponse de contenu multimédia comporte des adresses de tous les segments du contenu multimédia cible ; et après que des messages de demande de segment ultérieurs envoyés par le terminal client en fonction des adresses des segments sont reçus, pour envoyer des contenus de segment correspondant aux adresses des segments au terminal client ;
un deuxième module d'envoi, configuré : pour envoyer un premier message de réponse de contenu multimédia au terminal client, dans lequel le premier message de réponse de contenu multimédia comporte un identifiant, le nombre de segments et un premier segment du contenu multimédia cible ; et après que des messages de demande de segment ultérieurs qui sont envoyés par le terminal client en fonction des informations d'obtention de contenu multimédia et comportent l'identifiant du média cible et des valeurs d'indice des segments sont reçus, pour envoyer des contenus de segment correspondant à l'identifiant du média cible et aux valeurs d'indice des segments au terminal client ; et
un troisième module d'envoi, configuré : pour envoyer un premier message de réponse de contenu multimédia au terminal client, dans lequel le premier message de réponse de contenu multimédia comporte un premier segment et une adresse d'un prochain segment du contenu multimédia cible ; et après qu'un message de demande de segment ultérieur envoyé par le terminal client en fonction de l'adresse du prochain segment est reçu, pour envoyer un message de réponse de segment ultérieur, dans lequel le message de réponse de segment ultérieur comporte le prochain segment et une adresse d'un autre prochain segment.

11. Appareil pour une insertion de contenu multimédia dynamique basé sur une diffusion en continu par protocole HTTP selon la revendication 7, dans lequel : la première unité de réception est spécialement configurée pour recevoir un message de demande de description MPD qui est envoyé par le terminal client et comporte des informations d'utilisateur ;
l'appareil comprend en outre une unité de traitement et une troisième unité d'envoi, dans lequel l'unité de traitement est configurée pour insérer des adresses de segments du contenu multimédia cible dans un fichier de description MPD et la troisième unité d'envoi est configurée pour envoyer le fichier de description MPD qui comporte les adresses insérées des segments du contenu multimédia cible au terminal client ; lorsque la première unité de réception reçoit des demandes de segment envoyées par le terminal client en fonction des adresses des segments du contenu multimédia cible, la première unité d'envoi est spécialement configurée pour envoyer des contenus multimédias correspondant aux adresses des segments au terminal client.
